# EUROPÄISCHE PATENTSCHRIFT

(11) **EP 0 830 980 B1**
(45) Veröffentlichungstag und Bekanntmachung des Hinweises auf die Patenterteilung: **09.01.2002**
(21) Anmeldenummer: 97250240.5
(22) Anmeldetag: 15.08.1997
(51) Int. Cl.: B60P 7/13

(54) **Automatische Ladungssicherung für Container, Wechselbehälter oder dergleichen**
Automatic load securing device for containers, interchangeable containers or the like
Dispositif de fixation de charge automatique pour conteneurs, conteneurs échangeables ou similaires

(30) Priorität: 12.09.1996 DE 19638963
(43) Veröffentlichungstag der Anmeldung: 25.03.1998
(73) Patentinhaber: SIEMENS AKTIENGESELLSCHAFT, 80333 München (DE)
(72) Erfinder: Kröll, Joachim, 41363 Jüchen (DE); Franzen, Hermann, Dipl.-Ing., 41238 Mönchengladbach (DE)
(74) Vertreter: Meissner, Peter E., Dipl.-Ing.

(56) Entgegenhaltungen:
- DE-A- 2 747 778
- DE-A- 4 315 974
- DE-C- 19 548 803
- FR-A- 2 315 442

## Beschreibung

Die Erfindung betrifft eine Ladungssicherung für genormte Transportbehälter, wie Container, Wechselbehälter oder dergleichen auf Ladeflächen mittels Sicherungsbolzen, die aus einer Ruhestellung unter der Ladefläche um eine unterhalb derselben angeordnete horizontale Schwenkachse in ihre vertikale Wirkstellung hochschwenkbar sind und in dieser Stellung arretiert in Öffnungen in den Eckbereichen des Transportgutes verriegelbar sind.

Aus der gattungsbildenden DE-OS 19 06 826 ist eine einklappbare Drehriegelanordnung für Container bekanntgeworden, mit der zur wirtschaftlichen Ausnutzung eines Fahrzeuges an Stelle eines Containers auch ein normaler Aufbau zusammen mit dem gleichen Rahmenträger verwendbar sein soll. Durch das horizontale Umklappen des dort beschriebenen Drehriegels mit allen Anbauteilen in das Gehäuse unterhalb der Ladefläche wird erreicht, daß die Drehriegelanordnung in diesem Zustand weder nach oben noch nach unten über das Trägerprofil des Fahrzeugrahmens vorsteht. Die Betätigung des Drehriegels erfolgt bei der bekannten Lösung durch Schwenkhebel bzw. Handgriffe manuell, wie das auch bei anders ausgebildeten Verriegelungsvorrichtungen der Fall ist.

Im modernen Gütertransportwesen kommt es zunehmend darauf an, die Be- und Entladezeiten für Containertransportfahrzeuge zu verkürzen und durch Automatisierung des Ladevorganges die manuellen Tätigkeiten weitgehend einzuschränken. Da die Ladezeiten für den Einsatz der Transportfahrzeuge Verlustzeiten sind, wird angestrebt, vollkommen auf den Einsatz von Hilfspersonal zu verzichten.

Aus der DE 43 15 974 A1 ist eine Anordnung an Kombilifterfahrzeugen bekannt, bei der Aufnahmezapfen klapp-oder schwenkbar im Fahrzeug gelagert zwei definierte Positionen einnehmen können. Die herausgeklappte Position dient in üblicher Weise zur Aufnahme der Wechselbehälter oder Container, während in der eingeklappten Position die Breite des Fahrzeuges verschmälert wird, so daß ein freigängiger Fahr- und Positionierbetrieb des Fahrzeuges unterhalb der aufgestellten Wechselbehälter ermöglicht wird.
Die Betätigung der schwenkbaren Einheiten kann dabei manuell, z.B. über einen Griff oder über ein ferngesteuertes Stellglied erfolgen.

Für das automatische Be- und Entladen von Containerfahrzeugen gibt es bereits hinreichende, zum Teil auch verwirklichte Vorschläge, die diesem Ziel nahekommen. Für das Arretieren der Ladung auf der Ladefläche der Transportfahrzeuge sind bisher keine automatisch betätigten Ladungssicherungen bekannt. Davon ausgehend ist es die Aufgabe der vorliegenden Erfindung, eine automatische Ladungssicherung für genormte Transportbehälter, wie Container, Wechselbehälter oder dergleichen auf Ladeflächen von Transportfahrzeugen zu schaffen, die, beispielsweise ferngesteuert aktiviert werden kann und mit der die Ladungssicherung automatisch arretiert werden kann.

Zur Lösung der Aufgabe wird erfindungsgemäß, ausgehend von der vorstehend beschriebenen manuellen Lösung vorgeschlagen, daß zwischen Sicherungsbolzen und der Schwenkachse eine auf letzterer gelagerte Schwenklagerplatte in der Art eines einarmigen Hebels angeordnet ist, auf der der Sicherungsbolzen seitlich von der Schwenkachse beabstandet befestigt ist, das an der Schwenklagerplatte ein quer zur Schwenkachse und parallel zur Schwenklagerplatte verschieb- und arretierbarer Verriegelungsbolzen geführt ist, der von einer die Schwenklagerplatte in ihre Wirk- und Ruhestellung verschwenkbaren Kolben-Zylindereinheit verschiebbar ist und dadurch die Schwenklagerplatte (4) verriegelt.
Die erfindungsgemäße Ladungssicherung erfüllt folgende Funktionen vollautomatisch:
1. Ladungssicherung voll abgesenkt,
2. Ladungssicherung in Ladeposition und
3. Arretieren der Ladungssicherung.

Die volle Absenkung der Ladungssicherung ist insbesondere dann erforderlich, wenn auf ein und derselben Ladefläche unterschiedlich große Container transportiert werden. Werden beispielsweise auf einer Ladefläche zwei 20 ft ISO-Container transportiert, so werden Sicherungsbolzen in dem entsprechend vorgegebenen Abstand benötigt. Wird auf derselben Ladefläche ein 40 ft ISO-Container transportiert, so können diese Sicherungsbolzen nicht verwendet werden; es kommen andere Sicherungsbolzen zur Anwendung. Damit die Ladung über den nicht verwendeten Sicherungsbolzen glatt auf der Ladefläche aufliegen kann, müssen diese aus der Ladeflächenebene entfernt werden können. Das muß bei einem automatisierten Ladevorgang ebenfalls automatisch erfolgen können, was mit den durch die Erfindung aufgezeigten Mitteln und Maßnahmen möglich ist.

In einer Ausgestaltung der Erfindung ist vorgesehen, daß die Kolben-Zylindereinheit in der Wirkstellung des Sicherungsbolzens parallel zu dem Verriegelungsbolzen angeordnet ist und zur Erzeugung eines Momentes um die Schwenkachse der Schwenklagerplatte mit ihrem einen Ende an einem sich vom Verriegelungsbolzen abspreizenden Anlenkhebel und mit ihrem anderen Ende am Rahmen angelenkt ist.

Bei Betätigung der Kolben-Zylindereinheit wird einerseits der Sicherungsbolzen aus seiner Ruhestellung in die Wirkstellung und zurück bewegt und anschließend wird sichergestellt, daß der Sicherungsbolzen in seiner Wirkstellung durch den Verriegelungsbolzen arretiert ist. Damit ist der Sicherungsbolzen in der Lage, sowohl Horizontal- als auch Vertikalkräfte, welche auf die Ladesicherung wirken können, aufzunehmen. Die Kolben-Zylindereinheit selbst ist dabei von diesen Kräften entlastet.

In einer weiteren Ausgestaltung der Erfindung ist vorgesehen, daß der auf der dem Sicherungsbolzen abgewandten Unterseite der Schwenkplatte angeordnete Verriegelungsbolzen eine Druckfeder koaxial aufnimmt, die an einem Ende am Verriegelungsbolzen und am anderen Ende an der Schwenklagerplatte abgestützt ist. Vorzugsweise ist die Feder so dimensioniert, daß in der Wirkstellung des Sicherungsbolzens das Gewichtsmoment der Schwenklagerplatte um die Schwenkachse kompensierbar ist.

In günstiger Weise wird durch die Federwirkung sichergestellt, daß in der Wirkstellung der Ladungssicherung das Gewicht der Schwenklagerplatte mit dem Sicherungsbolzen kompensiert wird. Es erfolgt die Verriegelung und Entriegelung zeitversetzt zum Verschwenken der Schwenklageroplatte.

Durch die vorliegende Erfindung wird eine einfache automatisierbare Ladungssicherung für ISO-Container, Wechselbehälter und dergleichen geschaffen, die insbesondere bei der Verwendung von führerlosen, selbst angetriebenen Transport-Einheiten (STE) einsetzbar ist. Anders als bei konventionellem Gütertransport, wo die manuell aktivierbaren Ladungssicherungen auf den Transportfahrzeugen, z.B. den Güterwaggons, einzeln vom transportbegleitenden Personal betätigt werden, ist man nun durch die Erfindung in der Lage, die behälterspezifische Ladungssicherung automatisch (z.B. funkgesteuert) zu aktivieren. Die Erfindung schafft eine intelligente Ergänzung an der Nahtstelle zwischen Fördertechnik und Bahntechnik, wobei die Möglichkeit der Nachrüstung konventioneller Güterwaggons besteht.

Ein Ausführungsbeispiel der Erfindung ist in der Zeichnung dargestellt und wird nachfolgend beschrieben. Es zeigt:
- Figur 1: Die Draufsicht auf die Ladefläche eines Transportmittels,
- Figur 2: die Seitenansicht der Ladefläche nach Figur 1 mit einem 40 ft ISO-Container,
- Figur 3: die Ladefläche nach Figur 2 jedoch mit einem 20 ft ISO-Container und einem Wechserbehälter,
- Figur 4: die erfindungsgemäße Ladungssicherung in der Ruhestellung,
- Figur 5: die erfindungsgemäße Ladungssicherung in der Wirkstellung nicht arretiert,
- Figur 6: die Ladungssicherung gemäß Figur 5 arretiert und
- Figur 7: die Ladungssicherung nach Figur 6 in der Draufsicht.

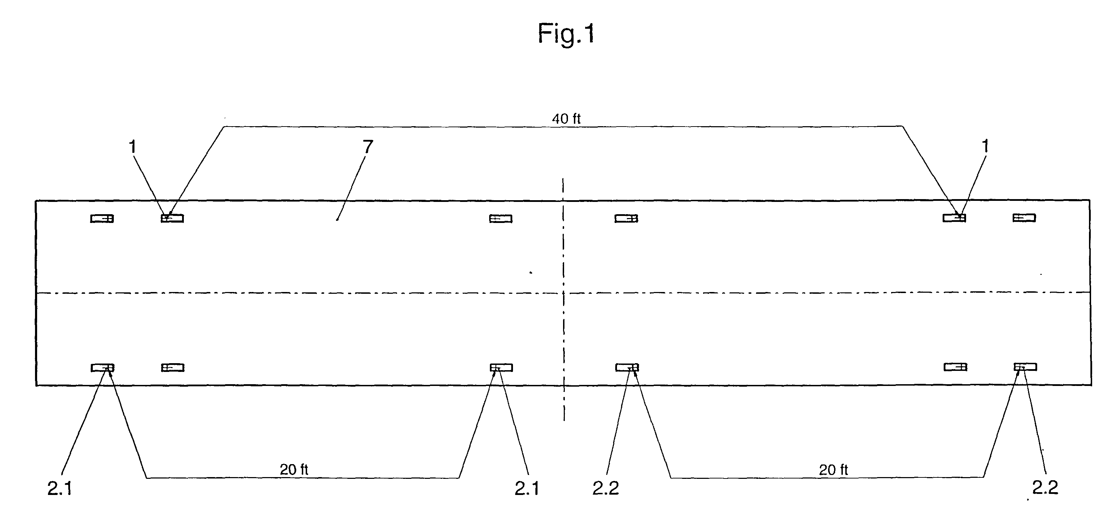

In Figur 1 wird die Ladefläche eines Transportmittels für 20 ft und 40 ft ISO-Container und für Wechselbehälter gezeigt. Die Ladefläche benötigt zwölf Befestigungspunkte zur Ladungssicherung. Abhängig von der Art und Größe der Ladung werden unterschiedliche Befestigungspunkte der Ladungssicherungen aktiviert. In Figur 1 sind in der oberen Zeichnungshälfte zwei der vier benötigten Befestigungspunkte zur Ladungssicherung eines 40 ft ISO-Containers mit 1 bezeichnet. In der unteren Zeichnungshälfte sind vier Befestigungspunkte für zweier 20 ft ISO-Container mit 2.1 und 2.2 bezeichnet. In beiden Fällen werden spiegelbildlich zur Längsachse die jeweils gegenüberliegenden Befestigungspunkte 1, 2.1 oder 2.2 benötigt.

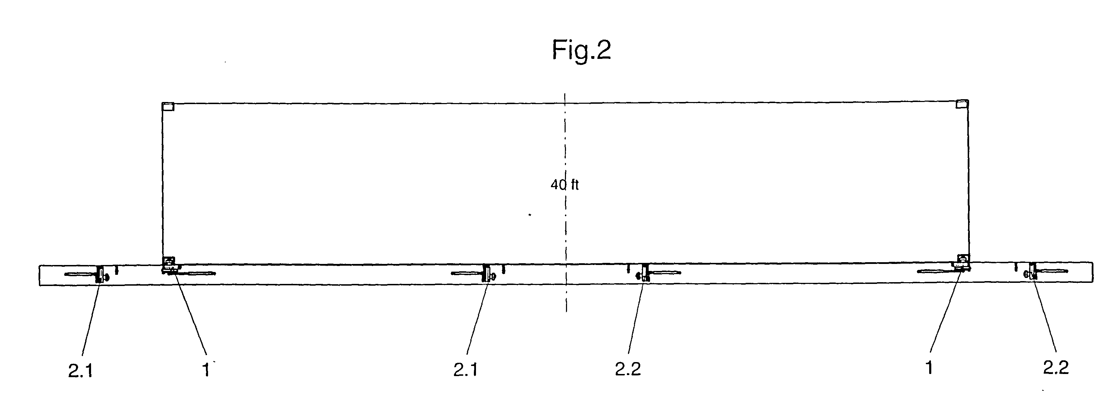

Wie in Figur 2 in der Seitenansicht erkennbar, sind für einen 40 ft ISO-Container die Befestigungspunkte 1 aktiviert, während die Punkte 2.1 und 2.2 deaktiviert sind. Mindestens die mittleren Befestigungspunkte sind so gestaltet, daß bei aufliegendem Container keine Bauteile der Ladungssicherung über die Ladeflächenebene herausragen.

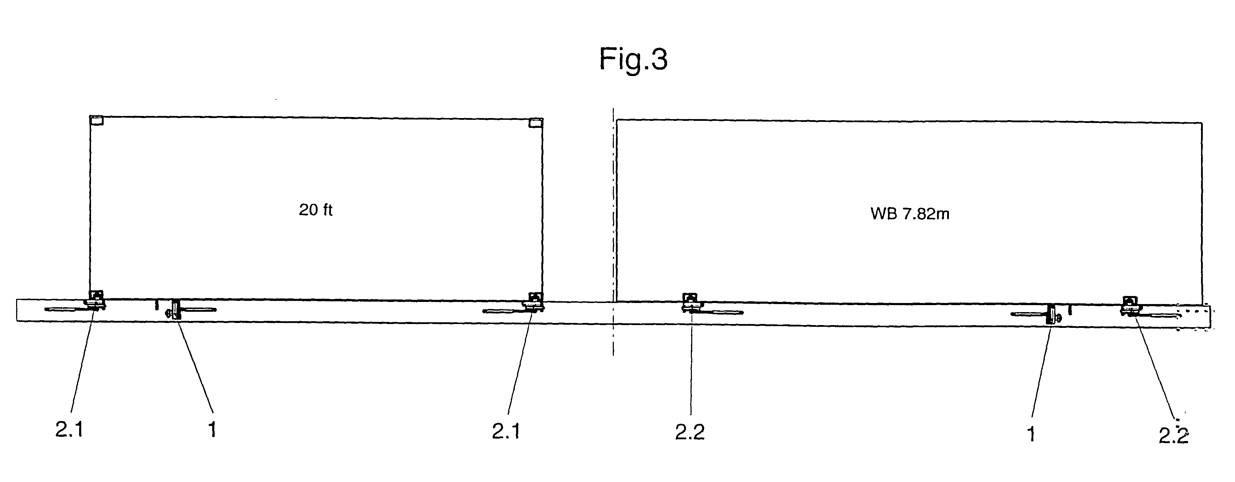

In Figur 3 ist der Transport eines 20 ft ISO-Containers und eines 7,82 m Wechselbehälters dargestellt. Der 20 ft ISO-Container benötigt zur Ladungssicherung die Befestigungspunkte 2.1, während der Befestigungspunkt 1 deaktiviert ist. Der Wechselbehälter benutzt die Befestigungspunkte 2.2, während ebenfalls der Befestigungspunkt 1 deaktiviert ist.

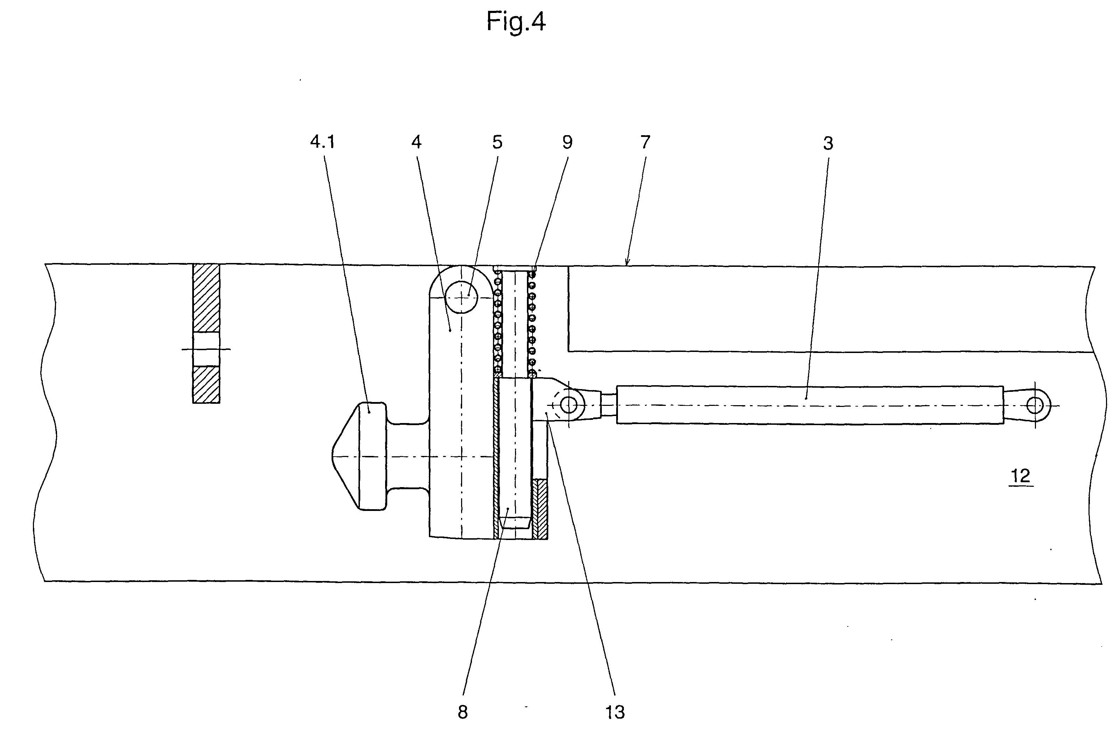

Wie in Figur 4 erkennbar, ist erfindungsgemäß der Sicherungsbolzen 4.1 auf einer Schwenklagerplatte 4 angeordnet, die um die Schwenkachse 5 derart nach unten verschwenkt ist, daß der Bolzen 4.1 unterhalb der Ladeflächenebene 7 ruht. Zum Verschwenken der Schwenklagerplatte 4 ist die Kolben-Zylindereinheit 3 vorgesehen, die einerseits am Rahmen 12 und andererseits an einem von dem Verriegelungsbolzen 8 abgespreizten Anlenkhebel 13 angelenkt ist.

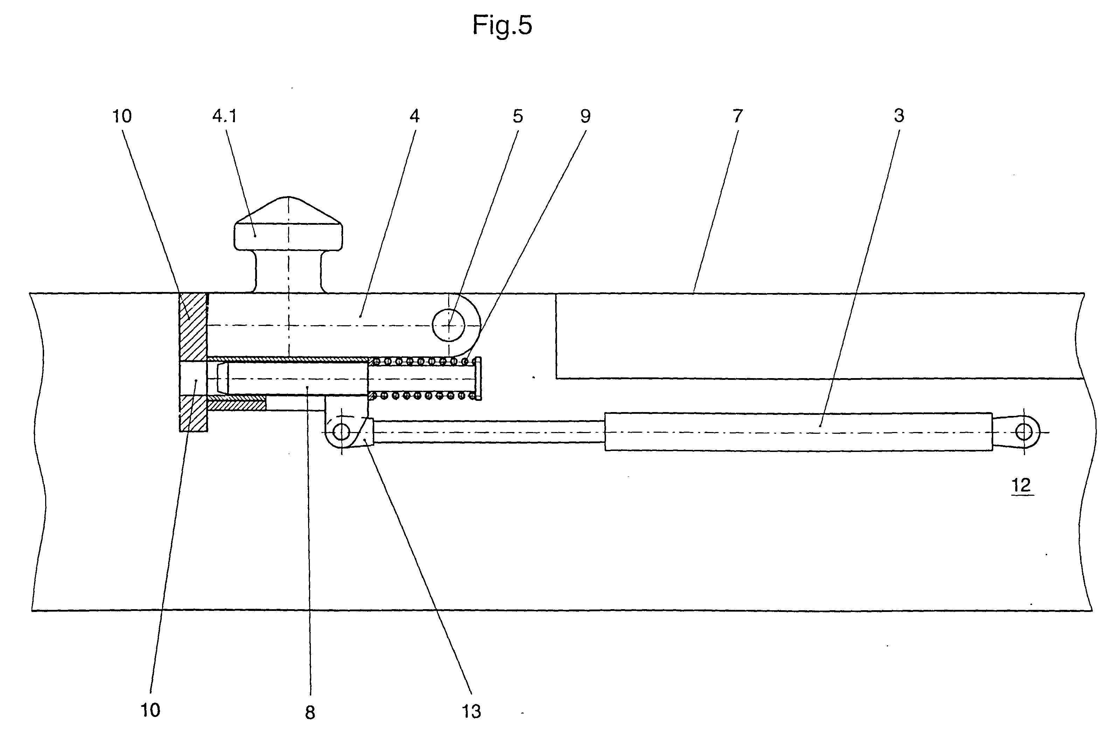

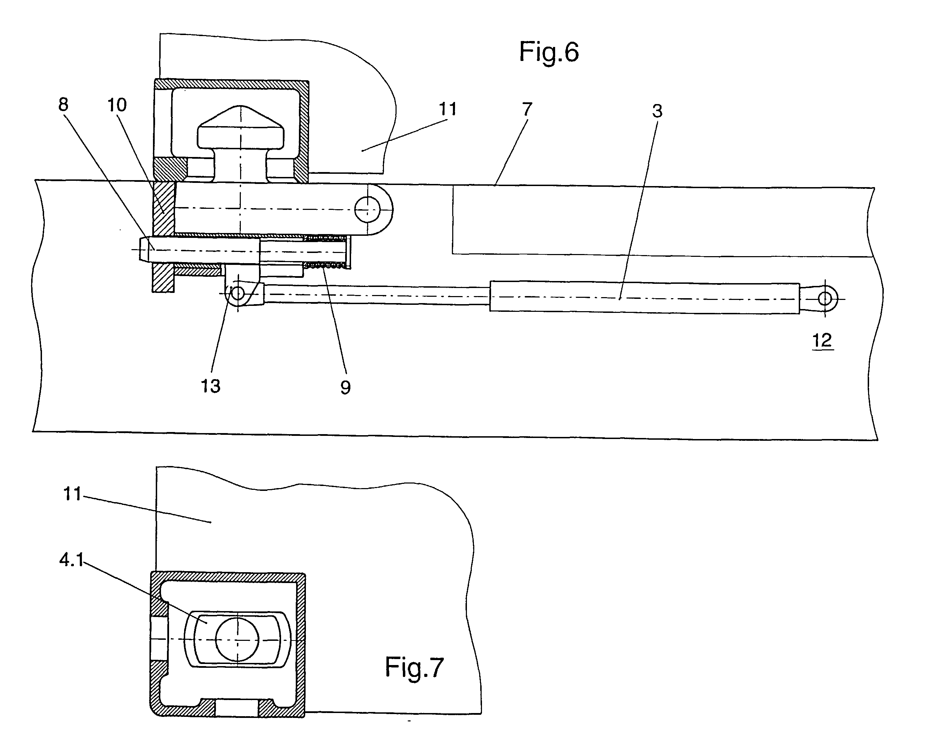

Beim Verschwenken der Schwenklagerplatte 4 um die Schwenkachse 5 wird die Kolben-Zylindereinheit 3 ausgefahren. Dabei bewirkt die Kolben-Zylindereinheit 3 zunächst die Bewegung der Schwenklagerplatte 4 nach oben und beim weiteren Ausfahren der Kolben-Zylindereinheit 3 und nach Erreichen der Wirkstellung des Sicherungsbolzens 4.1, in der die Schwenklagerplatte horizontal liegt, ein Verschieben des Sicherungsbolzens 8 (in der Zeichnungsebene nach links), bis dieser in der Verriegelung 10 festgelegt ist. In dieser Wirkstellung der Ladungssicherung steht der Sicherungsbolzen 4.1 senkrecht, wie in Figur 6 gezeigt ist. In dieser Stellung kann die Ladung 11, auf der Ladefläche 7 aufliegend, mit dem Sicherungsbolzen 4.1 arretiert werden. Der Sicherungsbolzen 4.1 seinerseits ist durch den Verriegelungsbolzen 8 gesichert, der die in Horizontalrichtung und auch in Vertikalrichtung wirksamen Kräfte sicher aufnimmt. Erkennbar (Fig. 4, 5 und 6) ist der Verriegelungsbolzen nach seiner der Kolben-Zylindereinheit zugewandten Seite verlängert und nimmt eine koaxiale Druckfeder auf, die sich einerseits an einem Bund im Endbereich des Verriegelungsbolzens und andererseits an der Schwenklagerplatte abstützt. In der Verriegelungsstellung des Verriegelungsbolzens bewirkt die komprimierte Feder 9 beim Einfahren der Kolben-Zylindereinheit 3 zunächst ein Zurückziehen des Sicherungsbolzens 8 bevor die Schwenkbewegung der Schwenklagerplatte 4 um die Schwenkachse 5 eingeleitet wird.

Figur 7 zeigt einen horizontaler Schnitt durch die Ladungssicherung nach Figur 6 im Bereich der Ecke der Ladung 11.

## Patentansprüche

1. Ladungssicherung für genormte Transportbehälter wie Container, Wechselbehälter oder dergl. auf Ladeflächen, mittels Sicherungsbolzen, die aus einer Ruhestellung unter der Ladefläche um eine unterhalb derselben angeordnete horizontale Schwenkachse in ihre vertikale Wirkstellung hochschwenkbar sind und in dieser Stellung arretiert in Öffnungen in den Eckbereichen des Transportgutes verriegelbar sind
**dadurch gekennzeichnet,**
**daß** zwischen Sicherungsbolzen (4.1) und der Schwenkachse (5) eine auf letzterer gelagerte Schwenklagerplatte (4) in der Art eines einarmigen Hebels angeordnet ist, auf der der Sicherungsbolzen (4.1) seitlich von der Schwenkachse (5) beabstandet befestigt ist, daß an der Schwenklagerplatte (4) ein quer zur Schwenkachse (5) und parallel zur Schwenklagerplatte (4) verschieb- und arretierbarer Verriegelungsbolzen (8) geführt ist, der von einer die Schwenklagerplatte (4) in ihre Wirk- und Ruhestellung verschwenkenden Kolben-Zylindereinheit (3) verschiebbar ist und dadurch die Schwenklagerplatte (4) verriegelt.

2. Ladungssicherung nach Anspruch 1
**dadurch gekennzeichnet,**
**daß** die Kolben-Zylindereinheit (3) in der Wirkstellung des Sicherungsbolzens (4.1) parallel zu dem Verriegelungsbolzen (8) angeordnet ist und zur Erzeugung eines Momentes um die Schwenkachse (5) der Schwenklagerplatte (4) mit ihrem einen Ende an einem sich vom Verriegelungsbolzen (8) abspreizenden Anlenkhebel (13) und mit ihrem anderen Ende am Rahmen (12) angelenkt ist.

3. Ladungssicherung nach Anspruch 2
**dadurch gekennzeichnet;**
**daß** der auf der dem Sicherungsbolzen (4.1) abgewandten Unterseite der Schwenklagerplatte (4) angeordnete Verriegelungsbolzen (8) eine Druckfeder (9) koaxial aufnimmt, die an einem Ende am Verriegelungsbolzen (8) und am anderen Ende an der Schwenklagerplatte (4) abgestützt ist.

4. Ladungssicherung nach Anspruch 3
**dadurch gekennzeichnet;**
**daß** die Druckfeder (9) so dimensioniert ist, daß in der Wirkstellung des Sicherungsbolzens (4.1) das Gewichtsmoment der Schwenklagerplatte (4) um die Schwenkachse (5) kompensierbar ist.

## Claims

1. Load lock for standard transport receptacles such as containers, interchangeable containers or similar, on vehicle load floors, by means of securing bolts, which can be swung upwards, from an inoperative position underneath the load floor, around a swivelling axle located below the load floor, into an operating position, in which position they can be locked and bolted into openings in the comer of the transport receptacle,
**characterised by** the fact
that there is, between securing bolts (4.1) and the swivelling axle (5), a swivel bearing plate (4) mounted on said axle in the form of a single-armed lever, on to which the securing bolt (4.1) is attached at the side of the swivelling axle (5) and at a distance from it, that there is, on the swivel bearing plate (4) - at right angles to the swivelling axle (5) and parallel to the swivel bearing plate (4) - a movable and lockable locking bolt (8) which can be moved by a piston-cylinder unit (3) which swivels the swivel bearing plate (4) into its operating and non-operating positions, thereby bolting the swivel bearing plate (4).

2. Load lock as in Claim 1,
**characterised by** the fact that
the piston-cylinder unit (3) is positioned, in the operating position of the securing bolt (4.1), parallel to the locking bolt (8), and is coupled - in order to exert a force around the swivelling axle (5) of the swivel bearing plate (4) - at one end to an articulated lever (13) protruding from the locking bolt (8), and at the other end to the frame (12).

3. Load lock as in Claim 2,
**characterised by** the fact that
the locking bolt (8) located on the underside of the swivel bearing plate (4) which faces the securing bolt (4.1) holds coaxially a compression spring (9), which is braced at one end against the locking bolt (8) and at the other end against the swivel bearing plate (4).

4. Load lock as in Claim 3,
**characterised by** the fact that
the dimensions of the compression spring (9) are such that it is able to provide compensation for the momentum of the swivel bearing plate (4) around the swivelling axle (5) in the operating position of the securing bolt (4.1).

## Revendications

1. Dispositif de sécurité de chargement pour des conteneurs de transport normés, comme des containers, des conteneurs interchangeables ou analogues, sur des surfaces de charge, au moyen de boulons de sécurité, qui, à partir d'une position de repos au-dessous de la surface de charge, peuvent pivoter vers le haut autour d'un axe de pivotement horizontal agencé au-dessous de celle-ci, dans leur position active verticale, et, bloqués dans cette position, sont verrouillables dans des ouvertures dans les zones de coin du produit transporté,
**caractérisé en ce que**, entre le boulon de sécurité (4.1) et l'axe de pivotement (5), il est agencé une plaque de support pivotante (4) montée sur ce dernier à la manière d'un levier à un bras, sur laquelle le boulon de sécurité (4.1) est fixé de façon écartée latéralement de l'axe de pivotement (5), **en ce que**, sur la plaque de support pivotante (4), il est guidé un boulon de verrouillage (8) pouvant être déplacé et bloqué transversalement à l'axe de pivotement (5) et parallèlement à la plaque de support pivotante (4), boulon qui est déplaçable par un vérin (3) faisant pivoter la plaque de support pivotante (4) dans sa position active et sa position de repos et, ainsi, verrouille la plaque de support pivotante (4).

2. Dispositif de sécurité de chargement selon la revendication 1,
**caractérisé en ce que** le vérin (3), dans la position active du boulon de sécurité (4.1), est agencé parallèlement au boulon de verrouillage (8) et est articulé, par une de ses extrémités, à un levier articulé (13) s'écartant du boulon de verrouillage (8) et, par son autre extrémité, au bâti (12) pour engendrer un moment autour de l'axe de pivotement (5) de la plaque de support pivotante (4).

3. Dispositif de sécurité de chargement selon la revendication 2,
**caractérisé en ce que** le boulon de verrouillage (8) agencé sur le dessous, opposé au boulon de sécurité (4.1), de la plaque de support pivotante (4) reçoit coaxialement un ressort de pression (9), qui est supporté, à une extrémité, contre le boulon de verrouillage (8) et, à l'autre extrémité, contre la plaque de support pivotante (4).

4. Dispositif de sécurité de chargement selon la revendication 3,
**caractérisé en ce que** le ressort de pression (9) est dimensionné de sorte que, dans la position active du boulon de sécurité (4.1), le moment pondéral de la plaque de support pivotante (4) autour de l'axe de pivotement (5) peut être compensé.
